# EUROPEAN PATENT SPECIFICATION

(11) **EP 2 916 929 B1**
(45) Date of publication and mention of the grant of the patent: **18.01.2017**
(21) Application number: 13789240.2
(22) Date of filing: 05.11.2013
(51) Int. Cl.: B01D 45/08

(54) **DROPLET SEPARATOR AND EVAPORATOR**
TROPFENABSCHEIDER UND VERDAMPFER
SÉPARATEUR DE GOUTTELETTES ET ÉVAPORATEUR

(30) Priority: 06.11.2012 US 201261722973 P; 06.11.2012 DE 102012220186
(43) Date of publication of application: 16.09.2015
(73) Proprietor: Efficient Energy GmbH, 85622 Feldkirchen (DE)
(72) Inventor: SEDLAK, Holger, 82054 Lochhofen / Sauerlach (DE); KNIFFLER, Oliver, 82054 Sauerlach (DE)
(74) Representative: Zinkler, Franz
(86) International application number: PCT/EP2013/073005
(87) International publication number: WO 2014/072272

(56) References cited:
- CN-B- 101 791 505
- DE-C- 735 142
- US-A- 134 261
- US-A- 4 198 217
- US-A- 4 264 411

## Description

The present invention relates to droplet separators or demisters and, in particular, to droplet separators for being used in heat pumps and heat pumps which may be used to heat or cool buildings or else to heat or cool other objects.

Figs. 5A and 5B represent a heat pump as is illustrated in the European patent EP 2016349 B1.

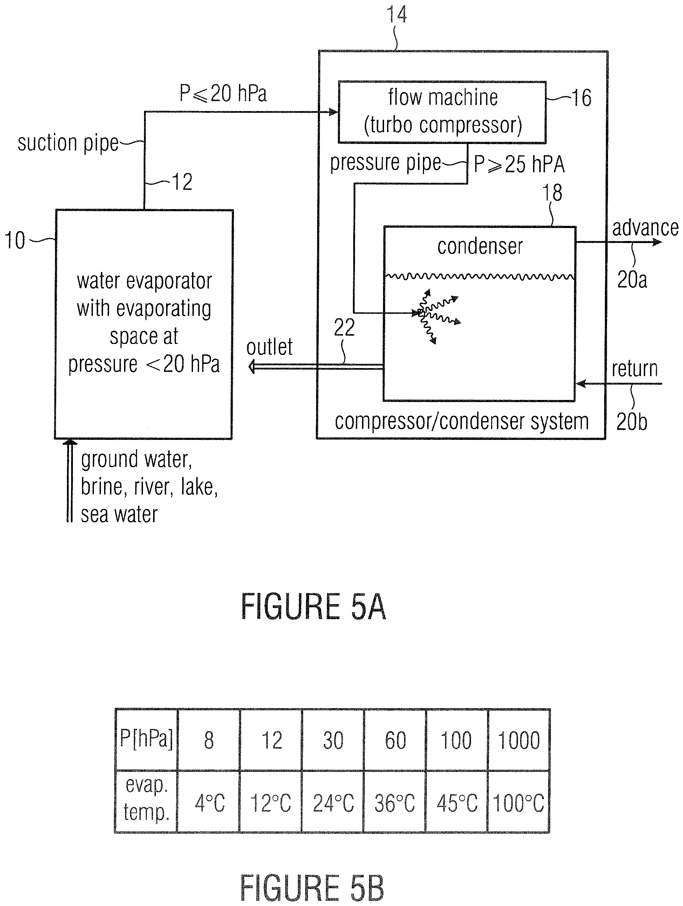

Fig. 5A shows a heat pump which comprises at first a water evaporator 10 for evaporating water as an operating liquid so as to generate a vapor in an operating vapor line 12 on the output side. The evaporator includes an evaporation space (not shown in Fig. 5A) and is configured to produce in the evaporation space an evaporation pressure of less than 20 hPa, so that the water evaporates in the evaporation space at temperatures below 15°C. The water is preferably ground water, brine circulating in the ground soil in an unconfined manner or in collector tubes, i.e. water with a certain salt content, river water, lake water or sea water. In accordance with the invention, all types of water, i.e. limy water, lime-free water, saline water or salt-free water, may preferably be used. The reason for this is that all types of water, i.e. all these "water substances", exhibit a favorable characteristic of water, namely the fact that water, which is also known under "R 718", comprises an enthalpy difference ratio of 6, which may be made use of for the heat pump process, which is more than 2 times the typical useful enthalpy difference ratio of, for example, R134a.

The water vapor is fed via the suction line 12 to a compressor/condenser system 14 which comprises a flow machine, such as, for example, a centrifugal compressor, exemplarily in the form of a turbo compressor, which in Fig. 5A is designated by 16. The flow machine is configured to compress the operating vapor to a vapor pressure of at least more than 25 hPa. 25 hPa corresponds to a condensing temperature of about 22°C, which, at least on relatively warm days, may already be a sufficient heating flow temperature for underfloor heating. In order to generate higher flow temperatures, pressures of more than 30 hPa may be generated for the flow machine 16, a pressure of 30 hPa corresponding to a condensing temperature of 24°C, a pressure of 60 hPa corresponding to a condensing temperature of 36°C, and a pressure of 100 hPa corresponding to a condensing temperature of 45°C. Underfloor heating systems are designed to be able to provide, even on very cold days, a sufficient degree of heating using a flow temperature of 45°C.

The flow machine is coupled to a condenser 18 which is configured to condense the compressed operating vapor. By means of condensing, the energy contained in the operating vapor is fed to the condenser 18 in order to be then fed to a heating system via the advance element 20a. The operating fluid flows back to the condenser via the return element 20b.

In accordance with the invention, it is preferred to withdraw heat (energy) from the water vapor rich in energy by the cooler heating water directly, the heat (energy) being absorbed by the heating water such that same will heat up. An amount of energy is withdrawn from the vapor such that the same is condensed and also participates in the heating cycle.

This means that an introduction of material into the condenser or heating system takes place, which is regulated by an outlet 22 such that the condenser in its condensing space has a water level which, despite continuously feeding water vapor and, thus, condensate, will always remain below a maximum level.

As has already been explained, it is preferred to use an open cycle, i.e. evaporating water, which represents the source of heat, directly without a heat exchanger. Alternatively, the water to be evaporated could, however, also be heated up at first by an external heat source using a heat exchanger. However, it must be kept in mind here that said heat exchanger also entails losses and apparatus complexity.

Additionally, it is preferred, in order to avoid losses for the second heat exchanger, which up to now is necessarily present on the condenser side, to use the medium there directly, too, i.e. when taking the example of a house featuring underfloor heating, having the water coming from the evaporator circulate directly in the underfloor heating.

Alternatively, a heat exchanger may be arranged on the condenser side, which is fed by the advance element 20a and comprises the return element 20b, wherein said heat exchanger cools the water in the condenser and thus heats up a separate underfloor heating liquid which will typically be water.

Due to the fact that water is used as the operating medium, and due to the fact that only the evaporated part of the ground water is fed to the flow machine, the degree of purity of the water is not important. The flow machine is, as is the condenser and, perhaps, the directly coupled underfloor heating, always supplied with distilled water such that, compared to present systems, the system entails reduced servicing. In other words, the system is self-cleaning since the system is always supplied with distilled water only, which means that the water in the outlet 22 is not polluted.

Additionally, it is to be pointed out that flow machines exhibit the characteristic - similarly to a plane's turbine - of not bringing the compressed medium into contact with problematic substances, such as, for example, oil. Instead, the water vapor is compressed only by the turbine or the turbo compressor, but not brought into contact and, thus, polluted with oil or another medium affecting purity.

When there are no other restricting rules, the distilled water discharged by the outlet may then be easily fed again to the ground water. Alternatively, it may, for example, also be seeped in the garden or in an open area, or it may be fed to a water treatment plant via a channel, if rules call for this.

By the combination of water as an operating medium featuring a useful enthalpy difference ratio which is two times better compared to R134a and the consequently reduced requirements to the system being closed (rather, an open system is preferred), and by using the flow machine, by means of which the compressing factors required are achieved efficiently and without affecting purity, what is achieved is an efficient and environmentally neutral heat pump process which becomes even more efficient when the water vapor is condensed directly in the condenser, since not a single heat exchanger will be required for the entire heat pump process.

Fig. 5B shows a table for illustrating different pressures and evaporating temperatures associated to said pressures, the result being that, in particular for water as an operating medium, relatively low pressures are to be chosen in the evaporator.

In order to achieve a heat pump of high efficiency, it is important for all the components, i.e. the evaporator, the condenser and the compressor, to be designed to be favorable.

On the other hand, it is of great importance for the heat pump to exhibit high long-time stability, since, depending on the usage, it has to operate very long without any damage occurring or service being necessary.

In particular when water is employed as an operating medium and when a flow machine, such as, for example, a turbo compressor or a centrifugal compressor, is used for compressing, relatively high revolution numbers of the compressor wheel are required.

On the other hand, it is problematic that, when evaporating, the result is not only pure vapor, but vapor and additionally droplets of the operating liquid. However, when these droplets of the operating liquid impinge on the very quickly revolving radial wheel in the compressor, the radial wheel may be damaged, which may be avoided by reducing the evaporation efficiency in the evaporator, that is setting the parameters in the evaporation space such that the liquid to be evaporated in the evaporation space is not caused to move to strongly. However, this is of disadvantage in that the efficiency in the evaporator decreases and in that a larger volume is necessary in order to achieve a sufficiently large amount of vapor for a heat pump performance necessary.

Another solution is providing a droplet separator which ensures the vapor reaching the radial wheel not to contain any droplets or only a very limited number of droplets.

However, it is important with this droplet separator that the separator itself does not entail especially large losses. If the droplet separator represents a great resistance to the vapor, said resistance must be compensated by an even higher revolution number of the compressor, which in turn is problematic with regard to efficiency and volume. It has been found out that droplet separators in the form of a mesh made of plastic threads are, with regard to manufacturing and setup, simple and cheap but, on the one hand, let drops pass which may result in problems in the radial wheel and, on the other hand, when being implemented such that they let pass only a very small number or no drops at all, represent a relatively high resistance to the vapor.

CN 101 791 505 B discloses a baffle type demisting device combining inertial separation and cyclone centrifugal separation and a method thereof. The method is as follows: the demisting device is designed as a two-level demister, and when airflow passes through a channel arranged between demisting blades of a first-level baffle on the base layer, mist drops impact the blades under the inertia effect due to flow line deflection, thereby realizing capture of large-diameter droplets. In addition, the outlet section of the baffle is arranged obliquely and faces one rotating direction, thereby achieving the functions of both demisting and diversion, so that the airflow can rise in a rotating way, when passing through the first-level blades. The channel of a second-level demister is of deflection type in the vertical direction and is of a concentric ring shape in the horizontal direction, so that when rotating airflow passes through the demisting channel on the layer, smaller mist drops can be further removed under the combined effect of the baffle inertia separation and the rotating centrifugal separation, thereby making the whole demister achieve the effect of completely demisting.

It is the object of the present invention to provide a more efficient droplet separator concept.

This object is achieved by a droplet separator in accordance with claim 1, an evaporator comprising a droplet separator in accordance with claim 11, or a method for manufacturing a droplet separator in accordance with claim 15.

The present invention is based on the idea that droplet separation may be achieved efficiently and, at the same time, without significant losses by using a plurality of curved fins or vanes made of a typically rigid material which are held by a holder. In particular, the fins and the holders are configured such that direct passage through the droplet separator is concealed such that the drops, due to a flight path of drops, in the vapor-droplet mixture from which the droplet separator is to separate the drops, do not the pass the droplet separator, but impinge on a fin.

On the other hand, the vapor may pass the droplet separator, without causing any significant losses. This means that droplets are held back very sufficiently by the fact that same impinge on the fins and, from there, flow downwards and drop into the evaporator space, whereas the vapor may pass through the droplet separator. Droplet separation is ensured by the fact that there is no direct passage through the droplet separator, i.e., when holding the droplet separator against light, one cannot see through the droplet separator. Thus, a droplet which typically is on a straight flight path cannot pass the droplet separator.

Redirecting for vapor takes place such that the vapor is "taken up" by the curved fins in the evaporation space, i.e. where the transition from the liquid phase to the gaseous phase takes place, passed through the fins and output on the other side of the droplet separator at a direction which is adaptable optimally to the path which the vapor has to follow after the droplet separator. Typically, a suction port of a compressor will be arranged there, which is funnel-shaped and unites the vapor from a larger diameter to a smaller diameter. Preferably, the curvature of the fins at the output of the droplet separator towards the suction port is configured such that the vapor is already introduced into the suction port optimally, i.e. into a central region thereof. This ensures that losses or turbulence do not occur, neither in front of the droplet separator nor behind the droplet separator, nor in front of nor at the suction port of the compressor, which would affect the efficiency of the heat pump. On the other hand, it is ensured that drops may be removed from the vapor efficiently such that, behind the droplet separator, there are no drops at all or only minimum amount of very small drops which, even when impinging on the compressor wheel, cannot cause any damage.

Preferred embodiments of the present invention will be detailed subsequently referring to the appended drawings, in which:
- Fig. 1: is a perspective illustration of a droplet separator in accordance with an embodiment;
- Fig. 2: is a schematic cross-sectional illustration of a droplet separator in accordance with an embodiment;
- Fig. 3: is a detailed cross-sectional view of a droplet separator in accordance with an embodiment;
- Fig. 4: is a schematic illustration of an evaporator with a compressor and a condenser connected thereto;
- Fig. 5A: is a general illustration of a known heat pump; and
- Fig. 5B: shows a chart of different pressures and associated evaporating temperatures.

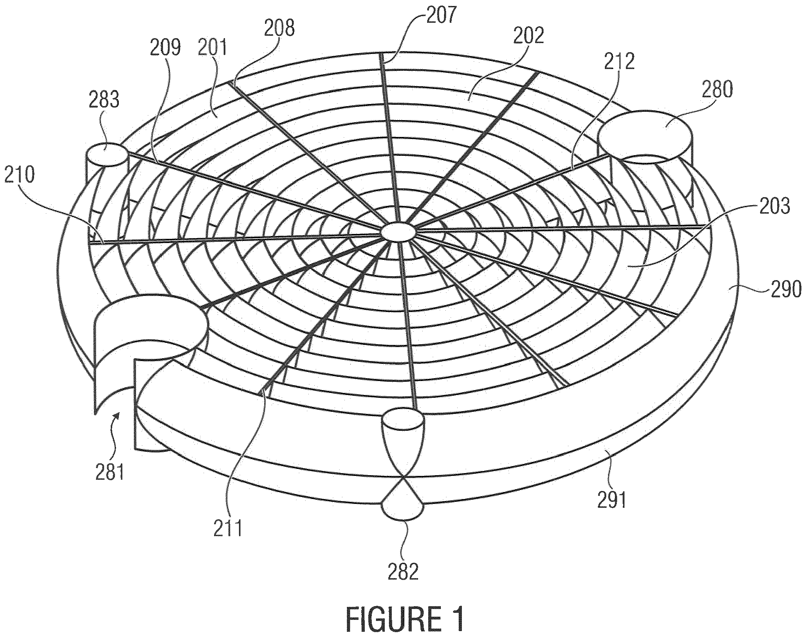

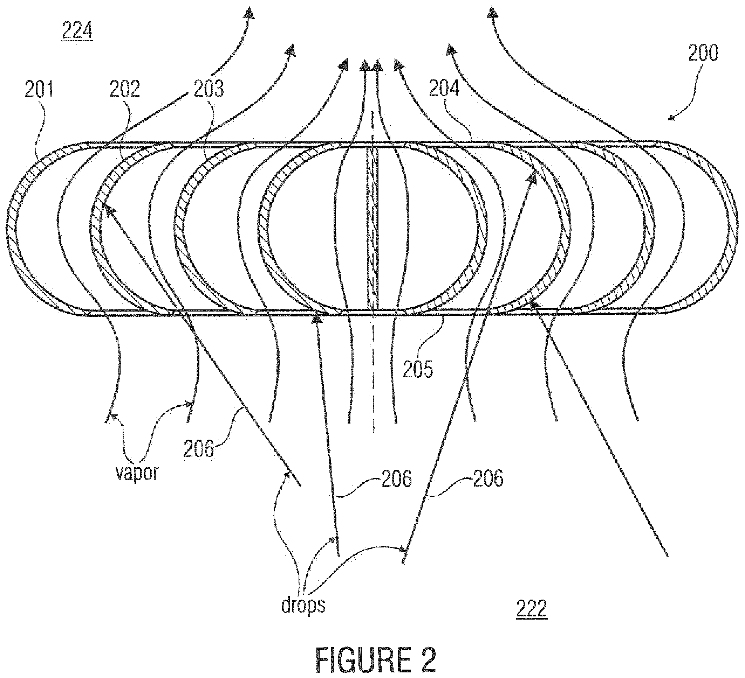

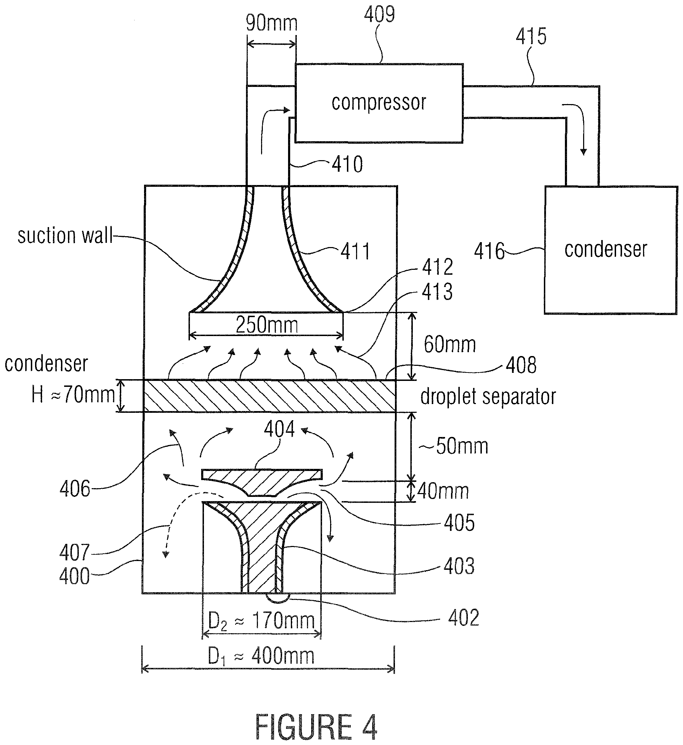

Figure 1 shows a droplet separator in accordance with an embodiment of the present invention in a perspective view, whereas a schematic cross-sectional illustration of a droplet separator is illustrated in Figure 2. In particular, the droplet separator 200 in Figure 2 is configured to separate droplets from a vapor-droplet mixture in motion. The vapor-droplet mixture in motion in Figure 2 is located below the droplet separator in a region 222, whereas above the droplet separator, i.e. in a region 224, in an ideal case, there is only vapor, but no drops. Due to the evaporation process taking place, which is achieved by the pressure in the evaporator being such that the evaporation temperature is brought to or close to the temperature of the medium to be evaporated, there is relatively chaotic movement of water vapor on the one hand and drops on the other hand in the lower region 222. At the same time, the vapor-droplet mixture is pulled upwards by the compressor which comprises its suction port above the droplet separator, as is exemplarily illustrated in Figure 4. This typically causes drops to be accelerated on a straight path, these drops falling, as is illustrated by certain trajectories at 206 in Figure 2, onto a plurality of curved fins 201, 202, 203 which are preferably formed of a rigid material. In addition, the droplet separator also includes a holder 204, 205 for holding the curved fins in a certain distance to one another. In particular, the fins 201 to 203 and the holders 204, 205 are configured such that direct passage through the droplet separator is concealed such that drops, due to the flight path of the drops, in the vapor-droplet mixture, cannot pass the droplet separator, but will impinge on a fin, as is shown using the trajectories 206.

However, vapor may easily pass in between the fins 201, 202, 203. In particular, the vapor is redirected gently in the lower region 222 due to the curvature of the fins, then passes along the curved wall of the respective fin, is redirected again, wherein, above the droplet separator 200, there is a relatively directed vapor flow directed to the center, as is symbolically illustrated in Figure 2. Due to the curvature of the individual fins, the vapor is not only freed from the drops of the operating liquid by the droplet separator, but at the same time is also redirected optimally with regard to flowing, i.e. in a direction and with a tendency as is optimal for a suction port of a downstream compressor.

Figure 1 shows a droplet separator in accordance with an embodiment in perspective, the fins 201, 202, 203 held by the holders 204, 208, 209, 210, 211 relative to one another being illustrated again. In the embodiment shown in Figure 1, the holders are formed as perpendicular walls which engage all the fins and keep those in shape and distance to one another. In the embodiment shown in Figure 1, six such walls are provided, with angles of 60° in between. However, fewer such walls may also be provided, such as, for example, only two walls, with an angle of 90° between the two walls. However, three, four or five walls may also be provided, it being preferred for these walls to be distributed evenly around the circle in order for all the regions of the embodiment shown in Figure 1 of a circular droplet separator to be held equally with regard to shape and stability.

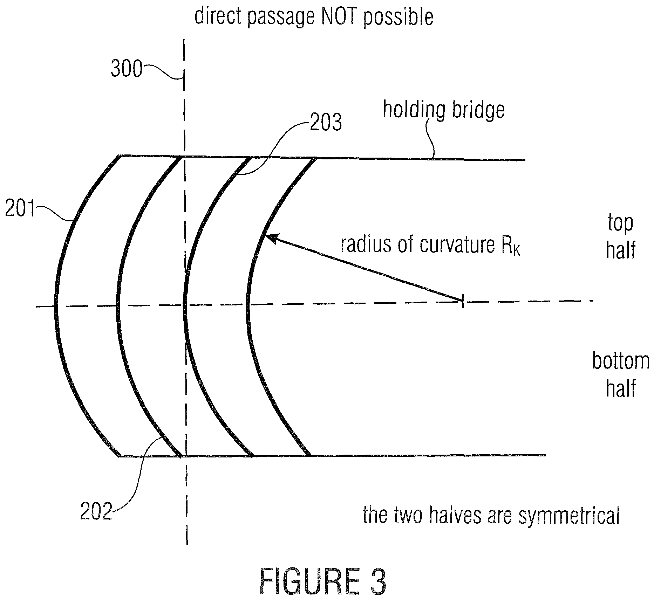

In addition, a total number of eleven fins are arranged in Figure 1, each fin exhibiting the same radius of curvature, as is illustrated in Figure 3. In particular, in the embodiment shown in Figure 1 which is illustrated in greater detail in Figure 3, each fin exhibits a radius of curvature preferably between 1 cm and 10 cm and, particularly preferably, between 4.5 cm and 5.5 cm. The radius of curvature also influences the density of fins, i.e. how many fins per length are arranged along the radius of the droplet separator. The density of fins is such that direct passage is not possible, as is illustrated in Figure 3 at 300. A water droplet taking a straight path through the droplet separator will inevitably impinge on at least one of the fins, trickle off downwards and thus get back to the evaporation space. Stronger radii of curvature result in a stronger redirection of the vapor, whereas larger radii of curvature comprising more gentle curvature, result in less redirection of the vapor, but also in the fins having to be arranged denser in order to avoid direct passage. Preferably, the diameter of the droplet separator, as is shown in Figure 1, is 40 cm; preferably, 11 ring-shaped all-around fins each being in a distance of 0.5 cm are provided. Different dimensions, however, may also be used. The density of fins is also related to the height of the droplet separator. Preferably, a height of 70 mm is used, wherein a minimum height of 2 cm has been found to be favorable; however, heights of more than 5 cm have proved to exhibit better redirecting characteristics, wherein, in particular, heights of more than 60 mm are preferred.

In the embodiments shown in Figures 1, 2 and 3, the droplet separator is formed to be circular or cylindrical. In other embodiments, the droplet separator, however, may also be shaped as a rectangle or cuboid or as a cylinder comprising a non-circular lateral boundary, for example, an elliptical lateral boundary or a pyramid shape. In particular, when using an angular outside shape, the fins would still be all around, but not with a circular, but angular shape or shaped in conformity with the outside shape of the droplet separator.

In one embodiment, the droplet separator, in top view, is of a round shape. Here, the fins are curved towards a central region of the droplet separator both at a top end, i.e. in the top part of Figures 1, 2 or 3, and at a bottom end, i.e. in the bottom part of the Figures. Irrespective of whether the droplet separator has a circular, rectangular, elliptical or other shape, a central region may be defined for each droplet separator which results from the fact that an axis with rotational symmetry or two axes with an ellipse are contained in this central region such that the droplet separator, irrespective of its very special implementation, will always result in the vapor exiting the droplet separator to be "compressed" towards the center and may thus be sucked by a suction port arranged above the droplet separator without high turbulence or losses.

In the embodiments shown in the Figures, the plurality of fins form a full ring. This feature and the characteristic of the fins being curved result in the exiting vapor to be compressed towards the center and in the vapor at the same time, below the droplet separator where there are still rather chaotic vapor/droplet movements, to be taken and redirected relatively gently, whereas the drops, due to their rather straight flight paths, impinge on the fins and cannot penetrate the droplet separator.

Although in the embodiments shown in Figures 1, 2 and 3, the fins all exhibit the same curvature, in other embodiments, the curvature of the fins may vary from the outer part towards the center such that the fins may exemplarily be curved stronger on the outer part and are of less curvature towards the center. Exemplarily or alternatively, this may also cause the density of fins relative to the droplet separator, i.e. is the number of fins per length of the droplet separator, to vary. Thus, the density of fins in the center would be higher than at the edge when the radius of curvature is weaker in the center than towards the outside. Alternatively or additionally, the height of the droplet separator may also vary from the center outwards. Thus, the droplet separator may exemplarily be higher in the center than at the edge. Thus, the radius of curvature in the center could be reduced when compared to the edge thereof, without increasing the number of fins per distance of the droplet separator.

In the embodiments shown in the Figures, each fin is formed as a sector of a surface of a sphere, the angle of the sector being determined by the height of the droplet separator.

In the embodiment shown in Figure 1, the droplet separator is formed as a plastic injection molding component, the top half 290 and the bottom half 291 being cast from the same plastic injection mold such that the top half 290 and the bottom half 291 are identical. Subsequently, two identical halves each are merged, exemplarily by gluing, welding or a similar connecting technique for connecting plastic parts.

Preferably, a rigid plastic material is used which ensures that the droplet separator maintains its structural shape. Any plastic injection molding materials may be used here. The droplet separator in Figure 1 is particularly suitable for being used in a heat pump where a condenser is arranged above the evaporator and where the water inlet and water outlet relative to the condenser is through the evaporator. For this purpose, a first recess 280 is provided to leave an inlet to the condenser through the droplet separator and a second recess 281 is provided through which the heated operating liquid may flow back from the condenser. The two recesses 280, 281 are configured such that they are able to receive a corresponding pipeline.

Additionally, another passage 282 is provided by means of which overflow from the condenser may take place, if used at all. A corresponding symmetrical passage is illustrated at 283.

An exemplary evaporator comprising a droplet separator in accordance with Figure 1 or another droplet separator in accordance with an embodiment of the present invention or any other droplet separator will be illustrated below referring to Figure 4. The evaporator includes an evaporator casing 400, an inlet 402 for operating liquid to be evaporated which is feed to the evaporator via an expansion element 403. Expansion to a diameter of about 170 mm takes place there, the entire evaporator casing being cylindrical and, preferably, of a diameter of 400 mm, as is indicated in Figure 4. The operating liquid fed via the inlet 402 and the expansion element 403 is then shielded to the top by means of a distributor disc 404 such that the operating liquid cannot evaporate upwards directly, but may exit laterally at a gap 405 which preferably has a thickness of about 40 mm, as is illustrated by the arrows. Due to the negative pressure in the evaporator and due to the fact that the pressure in the evaporator is maintained such that the operating liquid evaporates at the temperature at which it enters the evaporator, an evaporation process of the operating liquid takes place directly after same has exited it from the ring-shaped gap 405, as is indicated by arrows 406. At the same time, operating liquid which has not evaporated flows downwards, as is shown by an arrow 407, and the operating liquid evaporated collects at the bottom of the evaporator and is dissipated and typically fed again into the cycle via an outlet not shown in Figure 4. The evaporation process takes place mainly above the distributor disc 404 which preferably is formed so as to be optimum with regard to flowing and which may either be arranged above the water level, however, preferably is immersed into the water level so as to provide a situation optimum with regard to flowing such that there is a vapor-droplet mixture between the disc 404 and a droplet separator 408, which is moved upwards, due to the work performed by a compressor 409. The compressor 409 sucks the vapor-droplet mixture below the droplet separator 408 upwards via the suction line 410 and the expansion element 411 and via the suction port 412 which forms the end of the expansion element 411. By means of said suction, drops are accelerated onto a relatively straight path, which is of course also true for the vapor. The vapor, however, is deflected by the curved fins of the droplet separator and steered through the droplet separator 408, whereas the drops will drop onto the fins of the droplet separator and fall down again to the evaporation space and either evaporate there directly or reach the outlet, caused by gravity. Due to the curvature of the fins, the vapor then freed from drops is, with regard to flowing, oriented optimally towards the suction port 412, as is schematically indicated by the arrows 413.

The vapor freed from drops is then compressed in the compressor, thereby increasing the temperature of the vapor considerably. The vapor present at the output of the compressor 409 in the condenser feed 415 is at a considerably increased temperature level compared to the input of the compressor in the line 410. The energy the vapor in the line 415 carries is than released in a condenser 416, said energy exemplarily being used for heating purposes directly or via a heat exchanger when operating the heat pump as a heating system. However, when operating the heat pump for cooling purposes, the evaporator outflow represents the cooling liquid and the condenser outflow, i.e. what is transported of the hot operating liquid to a heat sink, represents "waste heat".

With regard to the droplet separator, the present invention is favorable in particular in connection with a suction port having a diameter of, for example, is 215 mm, as is illustrated in Figure 4, since the curvature of the individual fins is designed such that the vapor is concentrated and the vapor is redirected in the central region in an, with regard to flowing, optimum manner. Consequently, the droplet separator has not only the function of droplet separation but, at the same time, the function of redirecting the vapor in this region centrally towards the suction port in a flow-favorable manner.

Figure 4 illustrates a schematic cross-sectional view, also indicating various lengths. Preferred implementations for the lengths are in a range of +/- 50% of the lengths indicated. When, for example, indicating a length of 250 mm, like, for example, for the suction port diameter, forming the suction port at +/- 50% would be equally preferably, meaning that the suction port may, for example, be between 125 mm and 375 mm, whereas this may also be somewhat smaller, for example for the diameter of the droplet separator, which preferably is somewhat smaller than 400 mm, in that the droplet separator may also be somewhat smaller. When, for example, configuring the droplet separator with a diameter of 380 mm, same will not rest directly on the evaporator casing 400. However, this does not mean that drops can pass through the small gap, since the droplet separator also has a certain height, and since it is improbable for drops which may pass relatively linearly upwards past the side of the droplet separator to reach the suction port. Instead, it is considerably more probable for a droplet which really passes the edge of the droplet separator to not reach the suction port either.

In addition, it is obvious from Figure 1 that the droplet separator may comprise a through opening in its center. However, this through opening is unproblematic since, due to the setup or the expansion element 403 and the distributor disc 404, no drops which can take a nearly perpendicular upwards path through the central opening of the droplet separator will form in the center.

## Claims

1. A droplet separator for separating droplets from a vapor-droplet mixture in motion, comprising:
a plurality of curved fins (201, 202, 203) made of a material; wherein each of the fins is curved in accordance with a radius of curvature, wherein the radius of curvature is between 1 cm and 10 cm, and wherein each fin of the plurality of fins forms a complete ring; and
a holder (204) for holding the curved fins at a distance to one another,
wherein the fins (201, 202, 203) and the holder (204) are configured such that direct passage through the droplet separator is concealed such that drops, due to a flight path of the drops, in a vapor-droplet mixture do not pass the droplet separator but impinge on a fin,
wherein the droplet separator comprises a central region having a circular shape having a rotational symmetry around an axis, and
wherein the fins (201, 202, 203) are curved towards the axis of the central region of the droplet separator both at a top end and a bottom end of a respective fin.

2. The droplet separator in accordance with claim 1 or 2, comprising a height greater than 20 mm.

3. The droplet separator in accordance with one of claims 1 to 2, which is circular or elliptical in top view, and
wherein the fins are circular or elliptical and arranged in parallel to one another.

4. The droplet separator in accordance with claim 1, wherein the radius of curvature is the same for all the fins.

5. The droplet separator in accordance with one of claims 1 to 4, wherein each fin is formed as a sector from a surface of a sphere.

6. The droplet separator in accordance with one of the preceding claims,
wherein the holder (204) comprises a plurality of bridges (204, 208, 209, 210, 211, 212) by means of which the plurality of fins are connected to one another.

7. The droplet separator in accordance with claim 6, which is circular and which comprises at least two bridges, the bridges forming equal angles to one another.

8. The droplet separator in accordance with one of the preceding claims, formed as a plastic injection molding element.

9. The droplet separator in accordance with one of the preceding claims, wherein a top half and a bottom half are present, the top half and the bottom half being equal and merged to each other.

10. The droplet separator in accordance with one of the preceding claims,
wherein the droplet separator comprises a top to be directed towards a suction port (412) of a compressor (409), in an operating position of the droplet separator,
wherein the fins are configured such that tangents at the fins at the top are directed towards a central region of the suction port such that a flow direction of vapor flowing through the droplet separator is directed towards the central region of the suction port (413).

11. An evaporator comprising:
a droplet separator (408) in accordance with one of claims 1 to 10;
a liquid feeder (402, 403, 404) below the droplet separator; and
a suction port (412) above the droplet separator (408).

12. The evaporator in accordance with claim 11,
comprising a cylindrical casing (400),
wherein the droplet separator (408) is rotationally symmetrical and comprises a diameter being of such a size that the droplet separator is arranged in the cylindrical casing and is, at most, at a distance from a wall of the cylindrical casing of less than 10 mm;
wherein the suction port (412) comprises an opening the diameter of which is smaller than the diameter of the droplet separator, and arranged in the center above the droplet separator, a distance of the opening of the suction port (412) and the top of the droplet separator (408) being greater than 20 mm.

13. The evaporator in accordance with claim 11 or 12,
wherein the liquid feeder comprises:
an expansion element (403) through which the liquid to be evaporated may be fed;
a redirecting element (404) arranged above the expansion element (403) and spaced apart from same, for redirecting fed operating liquid radially outwards,
wherein a diameter of the expansion element and a diameter of the redirecting element both are smaller than a diameter of the droplet separator (408).

14. The evaporator in accordance with one of claims 11 to 13, further comprising:
a reducing element (411) the end of which forms the suction port (412), the end being directed towards the droplet separator (418), and the other end of which has a diameter smaller than the suction port, wherein the other end thereof is connected to a tube connectable to a vapor inlet of a compressor (409).

15. A method for manufacturing a droplet separator for separating drops from a vapor-droplet mixture in motion, comprising:
providing a plurality of curved fins made of a material; wherein each of the fins is curved in accordance with a radius of curvature, wherein the radius of curvature is between 1 cm and 10 cm, and wherein each fin of the plurality of fins forms a complete ring;
providing a holder for keeping the curved fins at a distance to one another; and
implementing the fins and the holder such that direct passage through the droplet separator is concealed such that drops, due to a flight path of the drops, in the vapor-droplet mixture do not pass the droplet separator but impinge on a fin,
wherein the droplet separator comprises a central region having a circular shape having a rotational symmetry around an axis, and
wherein the fins (201, 202, 203) are curved towards the axis of the central region of the droplet separator both at a top end and a bottom end of a respective fin.

## Patentansprüche

1. Tropfenabscheider zum Abscheiden von Tropfen aus einem bewegten Dampf-Tropfen-Gemisch, mit folgenden Merkmalen:
einer Mehrzahl von gekrümmten Lamellen (201, 202, 203) aus einem Material: wobei jede der Lamellen gemäß einem Krümmungsradius gekrümmt ist, wobei der Krümmungsradius zwischen 1 und 10 cm beträgt, und wobei jede Lamelle der Mehrzahl von Lamellen einen vollen Ring bildet; und
einem Halter (204) zum Halten der gekrümmten Lamellen in einem Abstand zueinander,
wobei die Lamellen (201, 202, 203) und der Halter (204) so ausgebildet sind, dass ein direkter Durchgang durch den Tropfenabscheider verdeckt ist derart, dass Tropfen aufgrund einer Tropfen-Flugbahn in dem Dampf-Tropfen-Gemisch den Tropfenabscheider nicht durchlaufen, sondern auf eine Lamelle auftreffen,
wobei der Tropfenabscheider einen Mittelbereich mit einer Kreisform mit einer Rotationssymmetrie um eine Achse aufweist, und
wobei die Lamellen (201, 202, 203) sowohl an einem oberen Ende als auch an einem unteren Ende einer jeweiligen Lamelle in Richtung der Achse des Mittelbereichs des Tropfenabscheiders gekrümmt sind.

2. Tropfenabscheider nach Anspruch 1 oder 2, der eine Höhe hat, die größer als 20 mm ist.

3. Tropfenabscheider nach Anspruch 1 oder 2, der in der Draufsicht kreisförmig oder elliptisch ist, und
wobei die Lamellen kreisförmig oder elliptisch sind und parallel zueinander angeordnet sind.

4. Tropfenabscheider nach Anspruch 1, bei dem der Krümmungsradius für jede Lamelle gleich ist.

5. Tropfenabscheider nach einem der Ansprüche 1 bis 4, bei dem jede Lamelle als Sektor aus einer Kugelhülle gebildet ist.

6. Tropfenabscheider nach einem der vorhergehenden Ansprüche,
bei dem der Halter (204) eine Mehrzahl von Stegen (204, 208, 209, 210, 211, 212) aufweist, durch die die Mehrzahl von Lamellen miteinander verbunden sind.

7. Tropfenabscheider nach Anspruch 6, der kreisförmig ist und bei dem wenigstens zwei Stege vorhanden sind, wobei die Stege gleiche Winkel zueinander bilden.

8. Tropfenabscheider nach einem der vorhergehenden Ansprüche, der als Kunststoff-Spritzgussteil ausgebildet ist.

9. Tropfenabscheider nach einem der vorhergehenden Ansprüche, bei dem eine obere Hälfte und eine untere Hälfte vorhanden ist, wobei die obere Hälfte und die untere Hälfte zueinander gleich sind und aneinandergefügt sind.

10. Tropfenabscheider nach einem der vorhergehenden Ansprüche,
wobei der Tropfenabscheider eine Oberseite aufweist, die zu einem Saugmund (412) eines Kompressors (409) in einer Arbeitsposition des Tropfenabscheiders zu richten ist,
wobei die Lamellen so ausgebildet sind, dass Tangenten an den Lamellen an der Oberseite zu einem Mittelbereich des Saugmundes hin gerichtet sind, so dass eine Strömungsrichtung eines Dampfes, der durch den Tropfenabscheider strömt, zu dem Mittelbereich des Saugmundes hin gelenkt wird (413).

11. Verdampfer mit folgenden Merkmalen:
einem Tropfenabscheider (408) nach einem der Ansprüche 1 bis 10;
einem Flüssigkeitszuführer (402, 403, 404) unterhalb des Tropfenabscheiders; und
einem Saugmund (412) oberhalb des Tropfenabscheiders (408).

12. Verdampfer nach Anspruch 11,
der ein zylindrisches Gehäuse (400) aufweist,
bei dem der Tropfenabscheider (408) rotationssymmetrisch ist und einen Durchmesser hat, der so groß ist, dass der Tropfenabscheider in dem zylindrischen Gehäuse angeordnet ist und höchstens einen Abstand von einer Wand des zylindrischen Gehäuses hat, der kleiner als 10 mm ist;
wobei der Saugmund (412) eine Öffnung aufweist, deren Durchmesser kleiner als der Durchmesser des Tropfenabscheiders ist, und der mittig oberhalb des Tropfenabscheiders angeordnet ist, wobei ein Abstand der Öffnung des Saugmundes (412) und der Oberseite des Tropfenabscheiders (408) größer als 20 mm ist.

13. Verdampfer nach Anspruch11 oder 12,
bei dem der Flüssigkeitszuführer folgende Merkmale aufweist:
einen Aufweiter (403), durch den die zu verdampfende Flüssigkeit zuführbar ist;
einen Umlenker (404), der oberhalb des Aufweiters (403) und von diesem beabstandet angeordnet ist, um zugeführte Arbeitsflüssigkeit radial nach außen umzulenken,
wobei ein Durchmesser des Aufweiters und ein Durchmesser des Umlenkers beide kleiner als ein Durchmesser des Tropfenabscheiders (408) sind.

14. Verdampfer nach einem der Ansprüche 11 bis 13, der ferner folgendes Merkmal aufweist:
einen Reduzierer (411), dessen Ende den Saugmund (412) bildet, wobei das Ende zu dem Tropfenabscheider (418) gerichtet ist, und dessen anderes Ende einen kleineren Durchmesser als der Saugmund hat, wobei dessen anderes Ende mit einer Röhre verbunden ist, die mit einem Dampfeinlass eines Kompressors (409) verbindbar ist.

15. Verfahren zum Herstellen eines Tropfenabscheider zum Abscheiden von Tropfen aus einem bewegten Dampf-Tropfen-Gemisch, mit folgenden Schritten:
Bereitstellen einer Mehrzahl von gekrümmten Lamellen aus einem Material; wobei jede der Lamellen gemäß einem Krümmungsradius gekrümmt ist, wobei der Krümmungsradius zwischen 1 und 10 cm beträgt, und wobei jede Lamelle der Mehrzahl von Lamellen einen vollen Ring bildet
Bereitstellen eines Halters zum Halten der gekrümmten Lamellen in einem Abstand zueinander; und
Ausbilden der Lamellen und des Halters so, dass ein direkter Durchgang durch den Tropfenabscheider verdeckt ist derart, dass Tropfen aufgrund einer Tropfen-Flugbahn in dem Dampf-Tropfen-Gemisch den Tropfenabscheider nicht durchlaufen, sondern auf eine Lamelle auftreten,
wobei der Tropfenabscheider einen Mittelbereich mit einer Kreisform mit einer Rotationssymmetrie um eine Achse aufweist, und
wobei die Lamellen (201, 202, 203) sowohl an einem oberen Ende als auch an einem unteren Ende einer jeweiligen Lamelle in Richtung der Achse des Mittelbereichs des Tropfenabscheiders gekrümmt sind.

## Revendications

1. Séparateur de gouttelettes destiné à séparer des gouttelettes d'un mélange vapeur-gouttelettes en mouvement, comprenant:
une pluralité d'ailettes courbées (201, 202, 203) réalisées en un matériau; où chacune des ailettes est courbée selon un rayon de courbure, où le rayon de courbure est compris entre 1 cm et 10 cm, et où chaque ailette de la pluralité d'ailettes forme un anneau complet; et
un support (204) destiné à maintenir les ailettes courbées à une distance l'une de l'autre,
dans lequel les ailettes (201, 202, 203) et le support (204) sont configurés de sorte que le passage direct à travers le séparateur de gouttelettes soit empêché de sorte que les gouttes, du fait d'un trajet de vol des gouttes dans un mélange vapeur-gouttelettes ne passent pas à travers le séparateur de gouttelettes, mais heurtent une ailette,
dans lequel le séparateur de gouttelettes comprend une région centrale présentant une forme circulaire présentant une symétrie de rotation autour d'un axe, et
dans lequel les ailettes (201, 202, 203) sont courbées vers l'axe de la région centrale du séparateur de gouttelettes tant à une extrémité supérieure qu'à une extrémité inférieure d'une ailette respective.

2. Séparateur de gouttelettes selon la revendication 1 ou 2, comprenant une hauteur supérieure à 20 mm.

3. Séparateur de gouttelettes selon l'une des revendications 1 à 2, lequel est circulaire ou elliptique en vue de dessus, et
dans lequel les ailettes sont circulaires ou elliptiques et disposées parallèles l'une à l'autre.

4. Séparateur de gouttelettes selon la revendication 1, dans lequel le rayon de courbure est le même pour toutes les ailettes.

5. Séparateur de gouttelettes selon l'une des revendications 1 à 4, dans lequel chaque ailette est réalisée en forme de secteur à partir d'une surface d'une sphère.

6. Séparateur de gouttelettes selon l'une des revendications précédentes,
dans lequel le support (204) comprend une pluralité de ponts (204, 208, 209, 210, 211, 212) au moyen desquels la pluralité d'ailettes sont connectées l'une à l'autre.

7. Séparateur de gouttelettes selon la revendication 6, qui est circulaire et qui comprend au moins deux ponts, les ponts formant des angles égaux entre eux.

8. Séparateur de gouttelettes selon l'une des revendications précédentes, réalisé sous forme d'un élément de moulage par injection de plastique.

9. Séparateur de gouttelettes selon l'une des revendications précédentes, dans lequel sont présentes une moitié supérieure et une moitié inférieure, la moitié supérieure et la moitié inférieure étant égales et fusionnées l'une avec l'autre.

10. Séparateur de gouttelettes selon l'une des revendications précédentes,
dans lequel le séparateur de gouttelettes comprend une partie supérieure destinée à être orientée vers un orifice d'aspiration (412) d'un compresseur (409), dans une position de fonctionnement du séparateur de gouttelettes,
dans lequel les ailettes sont configurées de sorte que les tangentes aux ailettes dans la partie supérieure soient orientées vers une région centrale de l'orifice d'aspiration de sorte qu'une direction de circulation de la vapeur passant à travers le séparateur de gouttelettes soit orientée vers la région centrale de l'orifice d'aspiration (413).

11. Evaporateur comprenant:
un séparateur de gouttelettes (408) selon l'une des revendications 1 à 10;
un alimentateur de liquide (402, 403, 404) au-dessous du séparateur de gouttelettes; et
un orifice d'aspiration (412) au-dessus du séparateur de gouttelettes (408).

12. Evaporateur selon la revendication 11,
comprenant un boîtier cylindrique (400),
dans lequel le séparateur de gouttelettes (408) est symétrique en rotation et comprend un diamètre d'une dimension telle que le séparateur de gouttelettes soit disposé dans le boîtier cylindrique et soit, tout au plus, à une distance d'une paroi du boîtier cylindrique de moins de 10 mm;
dans lequel l'orifice d'aspiration (412) comprend une ouverture dont le diamètre est plus petit que le diamètre du séparateur de gouttelettes, et disposé au centre au-dessus du séparateur de gouttelettes, une distance entre l'ouverture de l'orifice d'aspiration (412) et la partie supérieure du séparateur de gouttelettes (408) étant supérieure à 20 mm.

13. Evaporateur selon la revendication 11 ou 12,
dans lequel l'alimentateur de liquide comprend:
un élément d'expansion (403) à travers lequel peut être alimenté le liquide à évaporer;
un élément de redirection (404) disposé au-dessus de l'élément d'expansion (403) et espacé de ce dernier, destiné à rediriger le liquide de fonctionnement alimenté radialement vers l'extérieur,
dans lequel un diamètre de l'élément d'expansion et un diamètre de l'élément de redirection sont tous deux plus petits que le diamètre du séparateur de gouttelettes (408).

14. Evaporateur selon l'une des revendications 11 à 13, comprenant par ailleurs:
un élément réducteur (411) dont l'extrémité forme l'orifice d'aspiration (412), l'extrémité étant orientée vers le séparateur de gouttelettes (418), et dont l'autre extrémité présente un diamètre plus petit que l'orifice d'aspiration, où son autre extrémité est connectée à un tube pouvant être connecté à une entrée de vapeur d'un compresseur (409).

15. Procédé de fabrication d'un séparateur de gouttelettes destiné à séparer des gouttes d'un mélange vapeur-gouttelettes en mouvement, comprenant le fait de:
prévoir une pluralité d'ailettes courbées réalisées en un matériau; où chacune des ailettes est courbée selon un rayon de courbure, où le rayon de courbure est compris entre 1 cm et 10 cm, et où chaque ailette de la pluralité d'ailettes forme un anneau complet;
prévoir un support pour maintenir les ailettes courbes à une distance l'une de l'autre; et
mettre en oeuvre les ailettes et le support de sorte que le passage direct à travers le séparateur de gouttelettes soit empêché de sorte que les gouttes, du fait d'une trajectoire de vol des gouttes, dans le mélange vapeur-gouttelettes ne passent pas à travers le séparateur de gouttelettes, mais heurtent une ailette,
dans lequel le séparateur de gouttelettes comprend une région centrale présentant une forme circulaire présentant une symétrie de rotation autour d'un axe, et
dans lequel les ailettes (201, 202, 203) sont courbées vers l'axe de la région centrale du séparateur de gouttelettes tant à une extrémité supérieure qu'à une extrémité inférieure d'une ailette respective.
